# EUROPÄISCHE PATENTANMELDUNG

(11) **EP 3 284 705 A1**
(43) Veröffentlichungstag der Anmeldung: **21.02.2018**
(21) Anmeldenummer: 16184134.1
(22) Anmeldetag: 15.08.2016
(51) Int. Cl.: B65G 17/24, B65G 47/244, B65G 47/52

(54) **VORRICHTUNG UND VERFAHREN ZUM KONTROLLIERTEN ÜBERGEBEN VON STÜCKGÜTERN MIT EINEM AUSRICHTUNGSMITTEL**

(71) Anmelder: Siemens Aktiengesellschaft, 80333 München (DE)
(72) Erfinder: STOBÄUS, Jens, 90547 Stein (DE)
(74) Vertreter: Maier, Daniel Oliver

(57) **Zusammenfassung**

Die Erfindung offenbart eine Vorrichtung (2) zum kontrollierten Übergeben von einem Stückgut (4) von einer Zuführförderstrecke (6) über eine Einschleusförderstrecke (8) auf eine übernehmende Förderstrecke (10). Die Zuführförderstrecke (6) mündet in die Einschleusförderstrecke (8) und die Einschleusförderstrecke (8) mündet in einem Winkel in die übernehmende Fördertrecke (10). Die Einschleusförderstrecke (8) umfasst ein Ausrichtungsmittel, welches ausgestaltet ist, eine Ausrichtung des Stückguts (4) auf der Einschleusförderstrecke (8) auf definierte Weise zu verändern.

Die vorliegende Erfindung offenbart ein Verfahren zum kontrollierten Übergeben von einem Stückgut, umfassend die Verfahrensschritte: Veränderung einer Ausrichtung des Stückguts (4) auf definierte Weise auf der Einschleusförderstrecke (8) und kontrolliertes Übergeben des Stückguts (4) von der Einschleusförderstrecke (8) auf die übernehmende Förderstrecke (10).

## Beschreibung

Die vorliegende Erfindung bezieht sich auf das technische Gebiet der Fördersysteme für Stückgüter, beispielsweise für Pakete und Gepäckstücke.

In Fördersystemen müssen Stückgüter, insbesondere Postsendungen, beispielsweise Pakete, Gepäckstücke und Luftfrachtgüter, häufig in einer bestimmten Orientierung vorliegen, damit sie bei der Überführung eines Stückguts von ineinander mündenden Förderstrecken optimal positioniert sind. Dies ist besonders wichtig, wenn die Stückgüter Pakete sind, die auf einen Tilt-Tray- oder Crossbelt-Sorter eingeschossen werden, da diese vor dem Einschiessen um etwa 30° gegen die Förderrichtung verdreht werden müssen, um die Schalen des Sorters optimal zu treffen. Bei nicht optimaler Ausrichtung belegt dann ein Stückgut mehr als eine Schale, was die Sortierleistung der Anlage verringert. Darüber hinaus kann das Stückgut zwischen den Spalten der Schalen eingeklemmt werden, was zu einer Beschädigung des Stückguts und/ oder eines Ausfalls der Anlage führen kann.

Die bekannten und im Bereich von Crossbelt-Sortern angewandten Lösungen sind aufwendig und zielen darauf ab, auf unterschiedliche Weise eine aufgrund der unterschiedlichen Transportrichtungen auftretende Verdrehung des Stückguts zu erzeugen und im Anschluss eine Verdrehung zu verhindern bzw. zu minimieren, um eine optimale, da platzsparende und gutschonende Belegung des Carriers zu erzielen. Eine optimale Positionierung des Stückguts wird bereits auf einer Zuführförderstecke erreicht, die in einem bestimmten Winkel die Einschleusförderstrecke mündet, und eine Bewahrung dieser optimalen Positionierung während des Überführens. Dies kann erreicht werden, indem die Haftung zwischen Förderstrecke und Stückgut während des Überführens variiert wird. DE 10 2010 035 126 A1 offenbart einen kontrollierten Transport des Stückguts auf der Einschleusförderstrecke mit überlagerten, auf Fördergeschwindigkeit und Förderrichtung der Zuführförderstrecke und der übernehmenden Förderstrecke abgestimmten Geschwindigkeitskomponenten. Diese Lösungen können jedoch nicht immer zuverlässig sicherstellen, dass die Ausrichtung der Stückgüter bewahrt wird und sind darüber hinaus aufwendig in ihrer technischen Realisierung.

Der vorliegenden Erfindung liegt daher die Aufgabe zugrunde, Stückgüter kontrolliert und optimal positioniert auf eine übernehmende Förderstrecke zu übergeben. Diese Aufgabe wird durch die in den unabhängigen Ansprüchen beschriebenen Lösungen gelöst.

Die erfindungsgemäße Lösung sieht eine Vorrichtung zum kontrollierten Übergeben von einem Stückgut von einer Zuführförderstrecke über eine Einschleusförderstrecke auf eine übernehmende Förderstrecke vor. Die Zuführförderstrecke weist eine Zuführförderrichtung auf, die Einschleusförderstrecke eine Einschleusförderrichtung und die übernehmende Förderstrecke eine übernehmende Förderrichtung. Die Zuführförderstrecke mündet in die Einschleusförderstrecke und die Einschleusförderstrecke mündet in einem Winkel in die übernehmende Fördertrecke. Die Einschleusförderstrecke umfasst ein Ausrichtungsmittel, welches ausgestaltet ist, eine Ausrichtung des Stückguts auf der Einschleusförderstrecke auf definierte Weise zu verändern.

Um eine Seite des Stückguts auf besonders einfache Weise Wesentlichen parallel zur übernehmenden Förderrichtung auszurichten, kann das Ausrichtungsmittel einen oder mehrere im Wesentlichen parallel und/ oder orthogonal und/ oder in einem weiteren Winkel zur übernehmenden Förderrichtung angeordnete Anschläge umfassen.

Um zu verhindern, dass die Anschläge während eines Nichtgebrauchs Störkonturen darstellen und/ oder um einen möglichst kleinen Spalt am Anfang und/ oder Ende der Einschleusförderstrecke zu ermöglichen, können die Anschläge ein- und ausklappbar sein.

Um ein möglichst effektives Ausrichten zu ermögliche, kann das Ausrichtungsmittel Ausrichtungsförderelemente umfassen, welche ausgestaltet sind, auf das Stückgut eine im Wesentlichen orthogonal zur übernehmenden Förderrichtung wirkende Kraft auszuüben. Das Stückgut kann so von den Ausrichtungsförderelementen, mit denen das Stückgut in einem tragenden Kontakt ist, im Wesentlichen orthogonal zur übernehmenden Förderrichtung bewegt werden, wobei die Bewegung orthogonal zur übernehmenden Förderrichtung mit einer Bewegung entlang der Einschleusförderrichtung überlagert sein kann.

Die Ausrichtungsförderelemente können antreibbare Transportrollen und/ oder Transportkugeln umfassen. Transportrollen und Transportkugeln sind gängige und somit kostengünstige Komponenten, die zudem sehr robust sind und deren Antrieb leicht realisierbar ist.

Die Ausrichtungsförderelemente können mit einem unterhalb einer Transportebene des Stückguts positionierten Antriebsmittel, beispielsweise einem Förderband, antreibbar sein. Wenn das Förderband entlang der Einschleusförderrichtung bewegt wird, wird so mit nur einem Antrieb ein Transport des Stückguts entlang der Einschleusförderrichtung ermöglicht.

Gemäß einer bevorzugten Ausführungsform kann die Vorrichtung zum kontrollierten Übergeben von Postsendungen, beispielsweise Paketen, geeignet sein. Die Vorrichtung eignet sich dadurch sehr gut für eine Verwendung in Postsortieranlagen, insbesondere für Cross-Belt-Sorter und/ oder Tilt-Tray-Sorter.

Die Zuführförderstrecke und/ oder die Einschleusförderstrecke und/ oder die übernehmende Förderstrecke können als Gliederbandförderer ausgestaltet sein. Dies erlaubt eine besonders verschleißfeste und somit wartungsarme Ausgestaltung, einen breiten Einsatzbereich und/ oder einen Einsatz der Vorrichtung für besonders schwere Stückgüter.

Um die Ausrichtung des Stückguts noch länger zu kontrollieren, kann das Ausrichtungsmittel zudem ausgestaltet sein, das Stückgut während eines Überführens von Einschleusförderstrecke auf die übernehmende Förderstrecke zu unterstützen. So kann die Ausrichtung des Stückguts noch während des Überführens kontrolliert werden.

Hinsichtlich eines Verfahrens wird die vorstehend genannte Aufgabe gelöst durch ein Verfahren zum kontrollierten Übergeben von einem Stückgut von einer Zuführförderstrecke über eine Einschleusförderstrecke auf eine übernehmende Förderstrecke. Die Zuführförderstrecke weist eine Zuführförderrichtung auf, die Einschleusförderstrecke eine Einschleusförderrichtung und die übernehmende Förderstrecke eine übernehmende Förderrichtung. Die Zuführförderstrecke mündet in die Einschleusförderstrecke und die Einschleusförderstrecke mündet in einem Winkel in die übernehmende Förderstrecke. Das Verfahren umfasst die Verfahrensschritte Transport des Stückguts auf der Zuführförderstrecke in Zuführförderrichtung, Übergeben des Stückguts auf die Einschleusförderstrecke, Veränderung einer Ausrichtung des Stückguts auf definierte Weise auf der Einschleusförderstrecke und kontrolliertes Übergeben des Stückguts von der Einschleusförderstrecke auf die übernehmende Förderstrecke.

Um eine definierte Ausrichtung des Stückguts vor dem kontrollierten Übergeben entlang der übernehmenden Förderrichtung zu erzielen, kann das Stückgut auf der Einschleusförderstrecke im Wesentlichen parallel zur übernehmenden Förderrichtung ausgerichtet werden.

Das Stückgut kann zumindest auf einem Teil der Einschleusförderstrecke im Wesentlichen orthogonal zur übernehmenden Förderrichtung transportiert werden. Die Bewegung des Stückguts kommt durch eine Überlagerung der Bewegung im Wesentlichen orthogonal zur übernehmenden Förderrichtung und entlang der Einschleusförderrichtung zustande.

Um die Ausrichtung des Stückguts zu verändern, kann auf der Einschleusförderstrecke eine im Wesentlichen orthogonal zur übernehmenden Förderrichtung wirkende Kraft auf das Stückgut ausgeübt werden. Die orthogonal zur übernehmenden Förderrichtung wirkende Kraft kann durch Ausrichtungsförderelemente ausgeübt werden. Bei einem Antreiben der Ausrichtungsförderelemente mit einem unterhalb einer Transportebene des Stückguts positionierten Antriebsmittel, welches das Stückgut zugleich entlang der Einschleusförderrichtung transportiert, erfolgt ein schnelleres Transportieren des Stückguts orthogonal zur übernehmenden Förderrichtung als entlang der Einschleusförderrichtung und das Stückgut wird rotiert.

Gemäß einer bevorzugten Ausführungsform kann ein Drücken des Stückguts auf der Einschleusförderstrecke gegen im Wesentlichen parallel und/ oder orthogonal und/ oder in einem weiteren Winkel zur übernehmenden Förderrichtung angeordnete Anschläge erfolgen. Das Drücken kann technisch leicht mit Ausrichtungsförderelementen durchgeführt werden, so dass eine exakte Ausrichtung entlang der Anschläge besonders einfach erfolgen kann.

Um zu verhindern, dass die Anschläge Störkonturen darstellen, kann ein Absenken der Anschläge nach und Ausfahren der Anschläge vor der Veränderung der Ausrichtung des Stückguts erfolgen.

Bevorzugte Ausführungsformen der Erfindung werden nachfolgend anhand der Figuren beispielsweise näher erläutert. Dabei zeigen:
- Figur 1: eine Aufsicht auf einen Ausschnitt einer eine Vorrichtung umfassenden Sortieranlage;
- Figur 2: schrittweise eine Veränderung der Ausrichtung eines Stückguts auf einer Einschleusförderstrecke;
- Figur 3: schematisch die Förderrichtungen der unterschiedlichen Förderstrecken;
- Figur 4: schematisch ein Zusammenspiel unterschiedlich ausgerichteter Anschläge; und
- Figur 5: eine seitliche Ansicht eines Ausschnitts einer Einschleusförderstrecke.

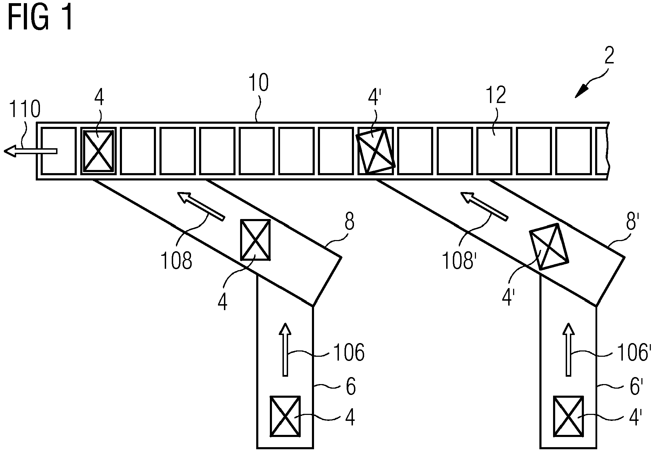

Figur 1 zeigt eine Aufsicht auf einen Ausschnitt einer eine Vorrichtung 2 umfassenden Sortieranlage gemäß einer bevorzugten Ausführungsform der Erfindung. Auf der Sortieranlage werden Pakete oder andere Postsendungen als Stückgüter 4 transportiert. Eine Verwendung der Vorrichtung 2 in anderen Sortieranlagen oder Förderstrecken mit andersartig ausgestaltetem Stückgut 4, beispielsweise Kisten, Behältern, Getränkekisten oder sonstigem Fördergut, das über einen Sorter läuft, ist ebenfalls möglich. Von zwei Zuführförderstrecken 6, 6' werden die Stückgüter 4 jeweils über Einschleusförderstrecken 8, 8' auf eine gemeinsame übernehmende Förderstrecke 10 transportiert. Die Einschleusförderstrecken 8, 8' münden in einem Winkel, hier spitzwinklig, in die übernehmende Förderstrecke 10. Die übernehmende Förderstrecke 10 umfasst Trageeinheiten 12 die zum Transport eines Stückguts 4 ausgestaltet sind. Die Förderstrecken 6, 8, 10 weisen jeweils eigene Förderrichtungen 106, 108, 110 auf.

Anhand der rechten Zuführförderstrecke 6' und Einschleusförderstrecke 8' sowie dem Stückgut 4' ist zur Verdeutlichung der Einschussproblematik ein nicht optimales Einschießen ohne Einsatz der Vorrichtung 2 dargestellt. Bei als Gurt- oder Riemenförderer ausgestalteter Zuführförderstrecke 6' und Einschleusförderstrecke 8' entsteht bei Übergabe des Stückguts 4' von der Zuführförderstrecke 6' auf die Einschleusförderstrecke 8' Reibung, da das Stückgut 4' zwangsweise über den Gurt der Einschleusförderstrecke 8' rutscht. Die entstehende Reibung ist bei unregelmäßigem Fördergut wie im Paketsortiergeschäft üblich, nur schwer beherrschbar, da Einflussfaktoren wie Gewichtsverteilung, Oberflächenbeschaffenheit, Masse, Form, Konvexität, etc. Einfluss auf das Rutschverhalten haben. Bei höheren Leistungen und Geschwindigkeiten wird die Ausrichtungsgenauigkeit immer schlechter und die Sortierleistung der Sortieranlage wird geringer.

Die übernehmende Förderstrecke 10 ist als Tilt-Tray- oder Crossbelt-Sorter ausgestaltet und die Trageeinheiten 12 sind als Schalen ausgestaltet. Damit die Stückgüter 4 nicht zwischen zwei Trageeinheiten 12 eingeklemmt werden und damit eine optimale Auslastung der Sortieranlage erfolgt, müssen die Stückgüter 4 optimal auf die Schalen eingeschossen werden, im vorliegenden Fall also so wie anhand des Stückguts 4 auf der linken Zuführförderstrecke 6 und Einschleusförderstrecke 8, welches um etwa 30° gegen die Zuführförderrichtung verdreht ist. Die optimale Ausrichtung des Stückguts 4 wird mit der Vorrichtung 2 erreicht. Die Vorrichtung 2 umfasst hierzu ein Ausrichtungsmittel, welches ausgestaltet ist, die Ausrichtung des Stückguts 4 auf der Einschleusförderstrecke 8 auf definierte Weise sicherzustellen. Beim Überführen auf die Einschleusförderstrecke 8 verdreht sich das Stückgut 4 auf der Einschleusförderstrecke 8 in etwa so wie das auf der rechten Seite dargestellte Stückgut 4', jedoch wird die Ausrichtung des Stückguts 4 im Anschluss durch das Ausrichtungsmittel so verändert, dass ein optimales Einschießen auf die übernehmende Förderstrecke 10 erreicht wird. Das optimale Einschießen wird erreicht bei einer im Wesentlichen parallelen Anordnung einer Kante des Stückguts 4 und einer Kante der Trageeinheiten 12, welche parallel zur übernehmenden Förderrichtung 110 angeordnet sind. Das Stückgut wird also im Wesentlichen parallel zur übernehmenden Förderrichtung 110 ausgerichtet. Um die auf der Einschleusförderstrecke 8 erreichte Ausrichtung des Stückguts 4 auf die übernehmende Förderstrecke 10 zu bewahren, erfolgt das Einschießen als kontrolliertes Übergeben des Stückguts 4.

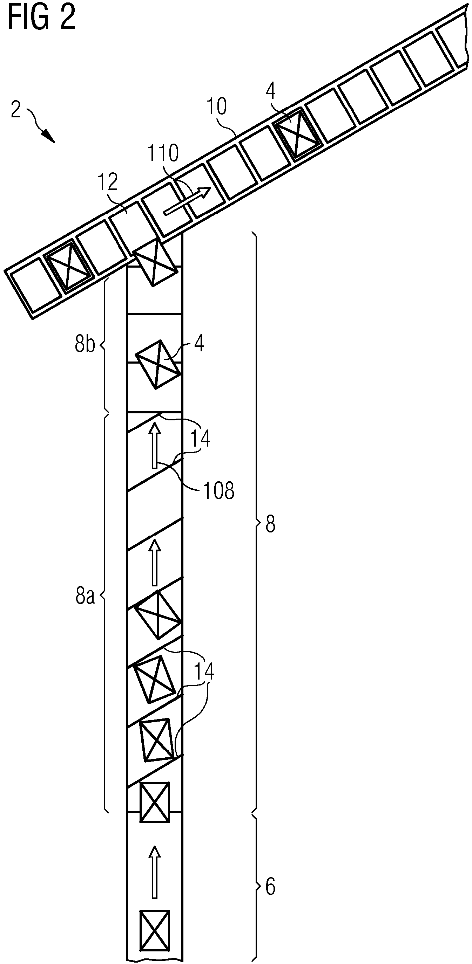

Figur 2 zeigt schrittweise die Veränderung der Ausrichtung eines Stückguts 4 auf einer Einschleusförderstrecke 8 sowie den Transport auf der übernehmenden Förderstrecke 10 gemäß einer bevorzugten Ausführungsform der Erfindung. Das entlang der Zuführförderrichtung ausgerichtete Stückgut 4 wird entlang der Zuführförderrichtung 106 auf der Zuführförderstrecke 6 auf die Einschleusförderstrecke 8 transportiert. Zuführförderrichtung 106 und Einschleusförderrichtung 108 stimmen hier überein. Auf einem ersten Teil 8a der Einschleusförderstrecke 8 erfolgt eine Veränderung der Ausrichtung des Stückguts 4, auf einem zweiten Teil 8b der Einschleusförderstrecke 8 wird das Stückgut 4 unter Erhaltung seiner Ausrichtung weiter hin zur übernehmenden Förderstrecke 110 transportiert.

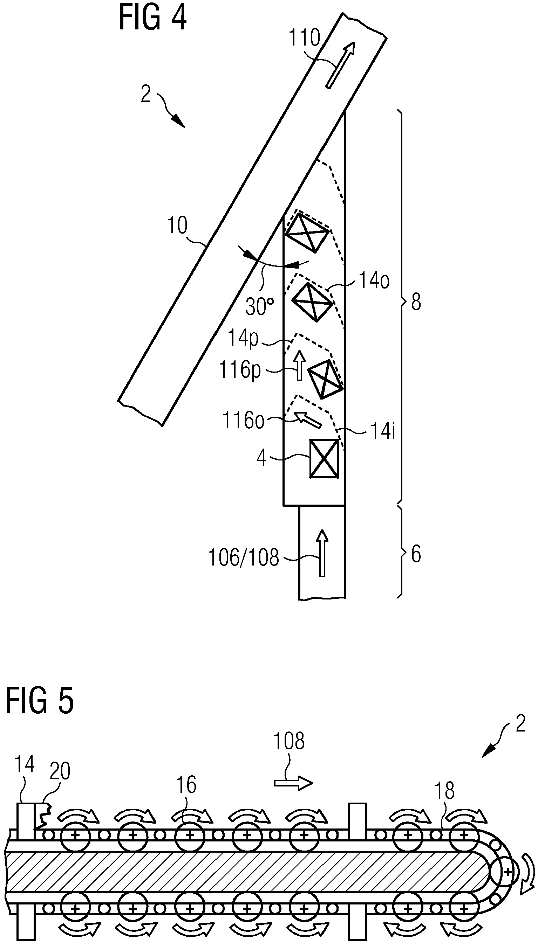

Die das Ausrichtungsmittel umfassende Einschleusförderstrecke 8 ist als modularer Kunststoffförderer ausgestaltet, wobei der erste Teil 8a der Einschleusförderstrecke 8 als Transportrollen 16 ausgestaltete Ausrichtungsförderelemente umfasst. Alternativ können die Ausrichtungsförderelemente auch als Transportkugeln ausgestaltet sein. Das Ausrichtungsmittel umfasst zudem parallel zur übernehmenden Förderrichtung 110 angeordnete Anschläge 14, hier in einem 60°-Winkel zur Einschleusförderrichtung 108. Die Transportrollen 16 weisen eine Transportrichtung orthogonal zur übernehmenden Förderrichtung 110 auf. Die Transportrollen 16 sind längs und quer angeordnet und bilden transportrollenteppichartig eine Transportebene 18 des Stückguts 4 aus. Um einen kontinuierlichen Transport zu ermöglichen, können die Transportrollen 16 und die Anschläge 14 in der Art eines umlaufenden Förderbandes ausgebildet sein, wie in Figur 5 ersichtlich. Die Transportrollen 16 werden gemeinsam mit den Anschlägen 14 entlang der Einschleusförderrichtung 108 bewegt.

Sobald das Stückgut 4 die Einschleusförderstrecke 8 erreicht, wird es von den Transportrollen im Wesentlichen orthogonal zur übernehmenden Förderrichtung 110 beschleunigt und entlang der Einschleusförderrichtung 108 transportiert. Auf diese Weise wird eine orthogonal zur übernehmenden Förderrichtung 110 wirkende Kraft auf das Stückgut 4 ausgeübt. Dadurch entsteht eine überlagerte Bewegung des Stückguts 4: das Stückgut 4 wird sowohl entlang der Einschleusförderrichtung 108 transportiert, als auch entlang der Transportrichtung orthogonal zur übernehmenden Förderrichtung 110. Das Stückgut 4 wird so rotiert und durch die Transportrollen gegen einen Anschlag 14 gedrückt. Durch das Drücken des Stückguts 4 gegen den Anschlag 14 stellen die Transportrollen im Zusammenspiel mit dem Anschlag die Ausrichtung parallel zur übernehmenden Förderrichtung 110 sicher. Nachdem das Stückgut 4 vollständig am Anschlag 14 anliegt, wird es nur noch auf der Einschleusförderstrecke 8 aufliegend entlang der Einschleusförderrichtung 108 transportiert.

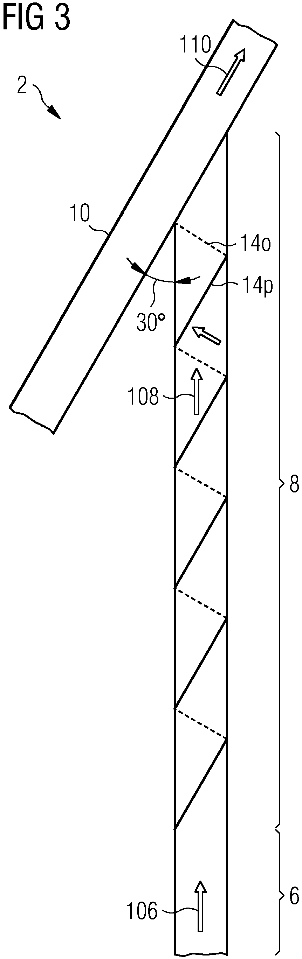

Um das Stückgut 4 auch bei anderen Anordnung der Anschläge 14 und/ oder bei einem Zusammenspiel mehrerer, zueinander ausgerichteten und zusammenspielender Anschläge 14, wie beispielsweise in Figur 3 und 4 dargestellt, effektiv auszurichten, wird auf das Stückgut 4 eine Kraft mit orthogonal zu dem jeweiligen Anschlag 14 wirkende Kraft, ausgeübt.

Die Länge der Abstände zwischen zwei Anschlägen 14 sowie die gesamte Länge der aktiven Einschleusförderstrecke 8, also des ersten Teils 8a, wird so gewählt, dass eine vollstände Ausrichtung des Stückguts 4 erzielt werden kann.

Nachdem das Stückgut 4 vollständig an dem Anschlag 14 anliegt, wird das Stückgut 4 mit definierter, idealer Ausrichtung auf einen als Eintaktförderer ausgestalteten zweiten Teil 8b der Einschleusförderstrecke 8 überführt und hin zur übernehmenden Förderstrecke 10 transportiert. Typische Einschussgeschwindigkeiten sind bei 1.5 - 2 m/s.

Damit das Stückgut 4 von einem Anschlag 14 abgebremst und ausgerichtet werden kann, muss der Anschlag 14 über die Transportebene 18 hinausreichen. Die Anschläge 14 können als Leitbleche, einfache Klötze oder Kulissen ausgestaltet sein.

Bei feststehenden Anschlägen 14, also Anschlägen 14 mit fester Anschlaghöhe 20, tritt so notwendigerweise ein Spalt zwischen Einschleusförderstrecke 8 und Zuführförderstrecke 6 sowie übernehmender Förderstrecke 10 auf, der mindestens so breit wie die Anschlaghöhe 20 ist. Um die Breite des Spaltes zu verringern und damit die Anschläge 14 bei Nichtgebrauch keine Störkonturen darstellen, kann die Anschlaghöhe 14 variiert werden, indem die Anschläge 14 hoch- und runterfahrbar bzw. ein- und ausklappbar ausgestaltet werden. Die Anschläge 14 werden eingeklappt, wenn sie nicht zur Ausrichtung verwendet werden.

Die Anordnung der Transportrichtungen, insbesondere der Einschleusförderrichtung 108 und der übernehmenden Förderrichtung 110, und der Anschläge 14o, 14p zueinander, gemäß einer bevorzugten Ausführungsform der Erfindung ist zum besseren Verständnis noch einmal schematisch in Figur 3 dargestellt, allerdings umfasst die Einschleusförderstrecke 8 hier nur den entscheidenden, da funktional zur Veränderung der Ausrichtung des Stückguts 4 erforderlichen ersten Teil 8a. Im Gegensatz zu Figur 2 mündet die Einschleusförderstrecke 8 in einem 30°-Winkel in die übernehmende Förderstrecke 10. Für das Funktionsprinzip der Vorrichtung und die Anordnung der Anschläge 14o, 14p relativ zur übernehmenden Förderrichtung 110 ist der Winkel unerheblich, für die technische Ausführung werden jedoch die Fördergeschwindigkeiten der Förderstrecken auf den jeweiligen Winkel optimiert angepasst.

Zusätzlich zu den parallel zur übernehmenden Förderrichtung 110 angeordneten Anschlägen 14p umfasst die Vorrichtung 2 noch orthogonal zur übernehmenden Förderrichtung 110 angeordnete Anschläge 14o. Auf diese Weise kann eine noch zuverlässigere Ausrichtung eines Stückguts 4 erfolgen, da die Stückgüter 4 durch die Ausrichtungsförderelemente im Wesentlichen orthogonal zur übernehmenden Förderrichtung bewegt und so gegen die parallel zur übernehmenden Förderrichtung 110 angeordneten Anschläge 14p gedrückt und somit auch ausgerichtet werden. Zusätzlich stellen die orthogonal zur übernehmenden Förderrichtung 110 angeordneten Anschläge 14o die gewünschte Ausrichtung eines Stückguts 4 mit zueinander rechtwinkligen Seiten sicher. Um die gewünschte Ausrichtung eines Stückguts 4 mit zueinander rechtwinkligen Seiten zu erzielen, wird prinzipiell nur einer der Typen von Anschlägen 14o, 14p benötigt. Die Transportrichtung der Ausrichtungsförderelemente muss allerdings bei alleiniger Verwendung von orthogonal zur übernehmenden Förderrichtung 110 angeordneten Anschlägen 14o allenfalls angepasst werden, damit das Stückgut 4 auch in die richtige Richtung gedreht wird und gegen die besagten Anschläge 14o gedrückt wird.

Figur 4 zeigt schematisch eine Aufsicht auf eine Vorrichtung 2 gemäß einer bevorzugten Ausführungsform der Erfindung, auf welcher die Veränderung der Ausrichtung eines Stückguts 4 mit unterschiedlichen, in einem Winkel zueinander angeordneten Anschlägen illustriert wird. Die Zuführförderstrecke 6 mündet in die Einschleusförderstrecke 8, welche identische Förderrichtungen 106, 108 aufweisen, und die Einschleusförderstrecke 8 mündet in einem 30°-Winkel in die übernehmende Förderstrecke 10. Auf der Einschleusförderstrecke 8 ist jeweils hintereinander eine Anordnung von Anschlägen 14o, 14p, 14i angeordnet, welche im Zusammenspiel mit den hier nicht dargestellten Transportrollen als Ausrichtungsmittel das Stückgut 4 schrittweise um 60° drehen.

Zunächst wird das Stückgut 4 von den Transportrollen 16, welche entlang der Einschleusförderrichtung 108 bewegt werden und gleichzeitig im Wesentlichen orthogonal zur übernehmenden Förderrichtung 110 ausgerichtet sind, entlang der Einschleusförderrichtung 108 bewegt und orthogonal zur übernehmenden Förderrichtung 110 beschleunigt. Dann trifft das Stückgut 4 auf den in einem spitzen Winkel zur Einschleusförderrichtung 108 ausgerichteten Anschlag 14i, wird dagegen gedrückt und so an den Anschlag 14i anliegend ausgerichtet. Im weiteren Verlauf wird das Stückgut weiter entlang der Förderrichtung 116o der Transportrollen 16 orthogonal zu übernehmenden Förderrichtung 110 und entlang der mit der Einschleusförderrichtung 108 übereinstimmenden Förderrichtung 116p der Transportrollen 16 bewegt, wobei diese Bewegung wie oben beschrieben als Überlagerung entsteht. Das Stückgut 4 wird dadurch in eine Ecke, welche ausgebildet wird von den beiden im rechten Winkel zueinander stehenden Anschläge 14p, 14o, welche parallel bzw. orthogonal zur übernehmenden Förderrichtung 110 angeordnet sind, gedrückt und so sehr zuverlässig ausgerichtet.

Figur 5 zeigt eine seitliche Ansicht eines Ausschnitts einer Einschleusförderstrecke gemäß einer bevorzugten Ausführungsform der Erfindung. Die Transportrollen 16 und die Anschläge 14 sind förderbandartig ausgestaltet und werden gesamthaft entlang der Einschleusförderrichtung 108 bewegt um das Stückgut 4 zu transportieren und auszurichten. Alternativ können die Transportrollen 16 auch mit einem unterhalb der Transportebene 18 des Stückguts 4 liegenden Förderband (hier nicht dargestellt) oder einem alternativen Antriebsmittel entlang der Einschleusförderrichtung 108 angetrieben werden.

Gemäß einer weiteren Ausführungsform ist eine der Förderstrecken 6, 8, 10 oder alle als Gliederbandförderer ausgestaltet.

### Bezugszeichenliste

- 2: Vorrichtung
- 4: Stückgut
- 6: Zuführförderstrecke
- 8: Einschleusförderstrecke
- 10: übernehmende Förderstrecke
- 12: Trageeinheit
- 14: Anschlag
- 16: Transportrolle
- 18: Transportebene
- 20: Anschlaghöhe
- 106: Zuführförderrichtung
- 108: Einschleusförderrichtung
- 110: übernehmende Förderrichtung
- 116: Förderrichtungen der Transportrolle 16

## Patentansprüche

1. Vorrichtung (2) zum kontrollierten Übergeben von einem Stückgut (4) von einer Zuführförderstrecke (6) über eine Einschleusförderstrecke (8) auf eine übernehmende Förderstrecke (10), wobei
- die Zuführförderstrecke (6) eine Zuführförderrichtung, die Einschleusförderstrecke (8) eine Einschleusförderrichtung und die übernehmende Förderstrecke (10) eine übernehmende Förderrichtung (110) aufweist;
- die Zuführförderstrecke (6) in die Einschleusförderstrecke (8) mündet; und
- die Einschleusförderstrecke (8) in einem Winkel in die übernehmende Fördertrecke (10) mündet;
**dadurch gekennzeichnet, dass**
die Einschleusförderstrecke (8) ein Ausrichtungsmittel umfasst, welches ausgestaltet ist, eine Ausrichtung des Stückguts (4) auf der Einschleusförderstrecke (8) auf definierte Weise zu verändern.

2. Vorrichtung nach Anspruch 1, **dadurch gekennzeichnet, dass** das Ausrichtungsmittel einen oder mehrere im Wesentlichen parallel und/ oder orthogonal und/ oder in einem weiteren Winkel zur übernehmenden Förderrichtung (110) angeordnete Anschläge (14) umfasst.

3. Vorrichtung nach Anspruch 2, **dadurch gekennzeichnet, dass** die Anschläge (14) ein- und ausklappbar sind.

4. Vorrichtung nach einem der Ansprüche 1 bis 3, **dadurch gekennzeichnet, dass**
das Ausrichtungsmittel Ausrichtungsförderelemente umfasst, welche ausgestaltet sind, auf das Stückgut (4) eine im Wesentlichen orthogonal zur übernehmenden Förderrichtung (110) wirkende Kraft auszuüben.

5. Vorrichtung nach Anspruch 4, **dadurch gekennzeichnet, dass** die Ausrichtungsförderelemente antreibbare Transportrollen (16) und/ oder Transportkugeln umfassen.

6. Vorrichtung nach einem der Ansprüche 4 bis 5, **dadurch gekennzeichnet, dass**
die Ausrichtungsförderelemente mit einem unterhalb einer Transportebene (18) des Stückguts (4) positionierten Antriebsmittel, beispielsweise ein Förderband, antreibbar sind.

7. Vorrichtung nach einem der Ansprüche 1 bis 6, **dadurch gekennzeichnet, dass**
die Vorrichtung zum kontrollierten Übergeben von Postsendungen, beispielsweise Paketen, geeignet ist.

8. Vorrichtung nach einem der Ansprüche 1 bis 7, **dadurch gekennzeichnet, dass**
die Zuführförderstrecke (6) und/ oder die Einschleusförderstrecke (8) und/ oder die übernehmende Förderstrecke (10) als Gliederbandförderer ausgestaltet sind.

9. Vorrichtung nach einem der Ansprüche 1 bis 8, **dadurch gekennzeichnet, dass**
das Ausrichtungsmittel zudem ausgestaltet ist, das Stückgut (4) während eines Überführens von Einschleusförderstrecke (8) auf die übernehmende Förderstrecke (10) zu unterstützen.

10. Verfahren zum kontrollierten Übergeben von einem Stückgut (4) von einer Zuführförderstrecke (6) über eine Einschleusförderstrecke (8) auf eine übernehmende Förderstrecke (10), wobei
- die Zuführförderstrecke (6) eine Zuführförderrichtung, die Einschleusförderstrecke (8) eine Einschleusförderrichtung und die übernehmende Förderstrecke (10) eine übernehmende Förderrichtung (110) aufweist;
- die Zuführförderstrecke (6) in die Einschleusförderstrecke (8) mündet; und
- die Einschleusförderstrecke (8) in einem Winkel in die übernehmende Förderstrecke (10) mündet;
umfassend die Verfahrensschritte:
a) Transport des Stückguts (4) auf der Zuführförderstrecke (6) in Zuführförderrichtung;
b) Übergeben des Stückguts (4) auf die Einschleusförderstrecke (8);
c) Veränderung einer Ausrichtung des Stückguts (4) auf definierte Weise auf der Einschleusförderstrecke (8);
d) kontrolliertes Übergeben des Stückguts (4) von der Einschleusförderstrecke (8) auf die übernehmende Förderstrecke (10).

11. Verfahren nach Anspruch 10, **dadurch gekennzeichnet, dass** das Stückgut (4) auf der Einschleusförderstrecke (8) im Wesentlichen parallel zur übernehmenden Förderrichtung (110) ausgerichtet wird.

12. Verfahren nach einem der Ansprüche 10 bis 11, **dadurch gekennzeichnet, dass**
das Stückgut (4) zumindest auf einem Teil der Einschleusförderstrecke (8) im Wesentlichen orthogonal zur übernehmenden Förderrichtung (110) transportiert wird.

13. Verfahren nach einem der Ansprüche 10 bis 12, **dadurch gekennzeichnet, dass**
auf der Einschleusförderstrecke (8) eine im Wesentlichen orthogonal zur übernehmenden Förderrichtung (110) wirkende Kraft auf das Stückgut (4) ausgeübt wird.

14. Verfahren nach einem der Ansprüche 10 bis 13, **gekennzeichnet durch**
Drücken des Stückguts (4) auf der Einschleusförderstrecke (8) gegen im Wesentlichen parallel und/ oder orthogonal und/ oder in einem weiteren Winkel zur übernehmenden Förderrichtung (110) angeordnete Anschläge (14).

15. Verfahren nach Anspruch 14, **gekennzeichnet durch** Absenken der Anschläge nach und Ausfahren der Anschläge (14) vor der Veränderung der Ausrichtung des Stückguts (4).
